# EUROPÄISCHE PATENTSCHRIFT

(11) **EP 1 436 201 B1**
(45) Veröffentlichungstag und Bekanntmachung des Hinweises auf die Patenterteilung: **27.04.2005**
(21) Anmeldenummer: 02781127.2
(22) Anmeldetag: 04.10.2002
(51) Int. Cl.: B65B 51/30, B65B 31/04

(54) **VORRICHTUNG UND VERFAHREN ZUM HERSTELLEN UND VERSCHLIESSEN VON AUS WENIGSTENS EINER HEISSSIEGELFÄHIGEN PACKSTOFFBAHN HERGESTELLTEN PACKUNGEN**
DEVICE AND METHOD FOR PRODUCING AND SEALING PACKAGINGS PRODUCED FROM AT LEAST ONE HEAT SEALABLE PACKAGING MATERIAL STRIP
PROCEDE ET DISPOSITIF POUR PRODUIRE ET SCELLER DES EMBALLAGES OBTENUS A PARTIR D'AU MOINS UNE BANDE DE MATERIAU D'EMBALLAGE THERMOSOUDABLE

(30) Priorität: 05.10.2001 DE 10149136
(43) Veröffentlichungstag der Anmeldung: 14.07.2004
(73) Patentinhaber: ROBERT BOSCH GMBH, 70442 Stuttgart (DE)
(72) Erfinder: NIEVERGELD, Hans, NL-6031 GB Nederweert (NL)
(86) Internationale Anmeldenummer: PCT/DE2002/003769
(87) Internationale Veröffentlichungsnummer: WO 2003/031269

(56) Entgegenhaltungen:
- WO-A-94/13537
- DE-A- 4 420 808
- DE-B- 1 165 481
- US-A- 2 387 812
- US-A- 4 601 159
- US-A- 4 693 058
- US-A- 5 097 648

## Beschreibung

### Stand der Technik

Die Erfindung betrifft eine Vorrichtung und ein Verfahren zum Herstellen und Verschließen von aus wenigstens einer heißsiegelfähigen Packstoffbahn hergestellten Packungen nach den Oberbegriffen der unabhängigen Ansprüche.

Eine Vorrichtung mit den Merkmalen des Oberbegriffs des Anspruchs 1 ist aus der DE 43 35 577 A1 bereits bekannt. Bei der Herstellung von Packungen mittels der bekannten Vorrichtungen tritt die Problematik auf, dass über den Querschnitt des gebildeteten Schlauchs betrachtet Bereiche mit unterschiedlicher Anzahl von Packstofflagen vorhanden sind. Dies kann z.B. daher rühren, dass eine zuvor gebildete Längsnaht gegen eine Beutelwand umgelegt wird, so dass im Bereich der Längsnaht vier Packstofflagen vorhanden sind, während im unmittelbaren Bereich daneben nur zwei Packstofflagen sind. Weiterhin ist es üblich, in den Boden- bzw. Kopfbereichen die Packstoffbahnen V-förmig nach innen zu falten, so dass auch in diesen Bereichen vier Packstofflagen vorhanden sind. Das Vorhandensein unterschiedlicher Anzahlen von Packstofflagen über den Querschnitt der Packungen ist insofern problematisch, dass beim Bilden der Quernähte sichergestellt werden muss, dass die anschließend vom Packstoffschlauch abgetrennten Packungen eine ausreichende Dichtigkeit aufweisen. Daher wird üblicherweise bei konventionellen Quernahtsiegeleinrichtungen mit einem relativ hohen Pressdruck bzw. mit einer relativ hohen Temperatur gearbeitet, damit in allen Bereichen des Querschnitts des Schlauches genügend Wärme und Druck übertragen wird, um dichte Quernähte herzustellen. Das Übertragen entsprechender Wärmemengen sowie Aufbringen entsprechender Siegeldrücke ist jedoch insbesondere bei kritischen Packstoffen oder aus Leistungsgründen begrenzt.

Um dieser Problematik entgegenzuwirken ist es daher aus der DE 199 04 154 A1 bekannt, flexible Siegelflächen an einer Quernahtsiegeleinrichtung auszubilden, die sich entsprechend der unterschiedlichen Anzahl von Packstofflagen an den Packstoff anschmiegen.

Eine ähnlich wirkende Lösung schlägt das DE-GM 94 13 035 vor, bei der in einer Siegelbacke einer Quernahtsiegeleinrichtung eine Silikoneinlage vorgesehen ist, die sich ebenfalls an den Packstoff anschmiegt, um so eine bessere Wärmeübertragung zu erzielen.

### Vorteile der Erfindung

Die erfindungsgemäße Vorrichtung zum Herstellen und Verschließen von aus wenigstens einer heißsiegelfähigen Packstoffbahn hergestellten Packungen mit den kennzeichnenden Merkmalen des Anspruchs 1 hat den Vorteil, dass sie bei relativ einfacher konstruktiver Ausbildung dichte Quernähte und gleichzeitig eine hohe Leistung der Vorrichtung ermöglicht.

Die Erfindung macht sich dabei die Überlegung zunutze, dass für die Herstellung dichter Siegelnähte eine genügende Erwärmung des Packstoffes insbesondere auch in den Bereichen der zu bildenden Quernaht sichergestellt werden muss, in denen eine reduzierten Anzahl von Packstofflagen vorhanden ist. Während beim Gegeneinanderpressen der beiden Siegelbacken in den Bereichen mit erhöhter Anzahl von Packstofflagen alleine schon durch den Druck der Siegelbacken eine gute Wärmeübertragung von den Siegelbacken in den Packstoff gewährleistet ist, ist die Wärmeübertragung in den Bereichen mit reduzierter Anzahl von Packstofflagen durch den verringerten Anpressdruck der Siegelbacken auf den Packstoff reduziert. Daher wird erfindungsgemäß vorgeschlagen, in letztgenannten Bereichen Saugöffnungen vorzusehen, die den Packstoff an die beheizte Siegelbacke heranziehen, und so eine hohe Wärmeübertragung sicherstellen.

Eine weitere bevorzugte Ausführungsform der Erfindung sieht vor, die Saugöffnungen mit einer Überdruckquelle zu verbinden. Damit ist es möglich, die Packstofflagen nach dem Erwärmen durch den Überdruck gegeneinander zu pressen, um so einen innigeren Kontakt zwischen den erwärmten Packstofflagen und somit eine dichtere Quernaht bilden zu können.

### Zeichnung

Ein Ausführungsbeispiel der Erfindung ist in der Zeichnung dargestellt und wird nachfolgend näher erläutert. Es zeigen:
Figur 1 eine Vorrichtung zum Herstellen von Beutelpackungen in einer vereinfachten Vorderansicht,
Figur 2 eine mittels der Vorrichtung nach Figur 1 hergestellte Beutelpackung in perspektivischer Ansicht,
Figur 3 einen Schnitt in der Ebene III-III der Figur 2 zur Verdeutlichung der unterschiedlichen Anzahlen von Packstofflagen,
Figur 4 eine einzelne erfindungsgemäße Siegelbacke in vereinfachter perspektivischer Ansicht,
Figur 5 einen vereinfachten Schnitt durch eine erfindungsgemäße Quernahtsiegeleinrichtung und
Figur 6 einen Schnitt durch einen Teilbereich der Quernahtsiegeleinrichtung gemäß Figur 5 während des Siegelvorgangs.

### Beschreibung des Ausführungsbeispiels

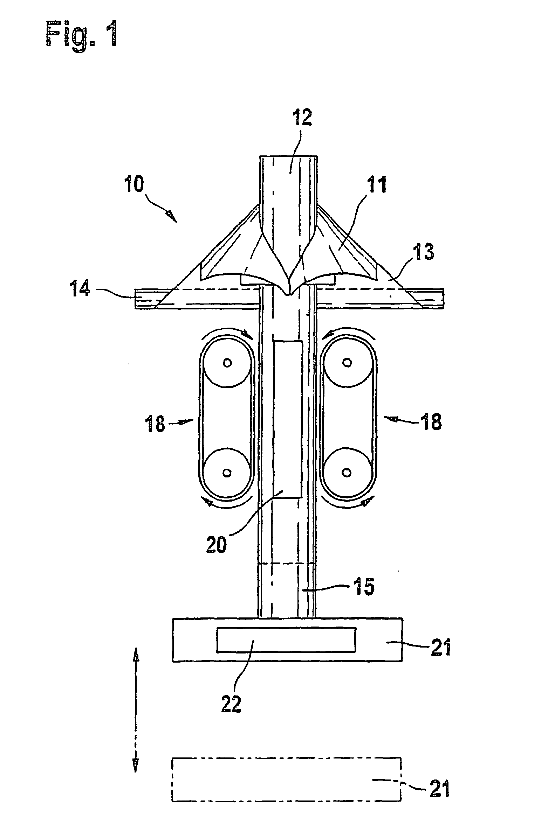

In der Figur 1 ist eine an sich bekannte Schlauchbeutelmaschine 10 dargestellt. Die Schlauchbeutelmaschine 10 weist eine Formschulter 11 auf, die ein kombiniertes Form- und Füllrohr 12 umgreift. Mittels der Formschulter 11 und des Form- und Füllrohrs 12 wird eine von einer nicht dargestellten Vorratsrolle abgezogene, heißsiegelfähige Packstoffbahn 13, welche der Formschulter 11 über eine Zulaufrolle 14 zugeführt wird, zu einem Schlauch 15 geformt.

Unterhalb der Formschulter 11 sind an dem Form- und Füllrohr 12 einander gegenüberliegend zwei Vakuumvorzugsbänder 18 angeordnet, die zum Vorzug des Schlauches 15 dienen. In Höhe der Vakuumvorzugsbänder 18 ist weiterhin an der Vorderseite des Form- und Füllrohrs 12 eine Längsnahtsiegeleinrichtung 20 angeordnet, die die beiden von der Formschulter 11 übereinander gelegten Randbereiche der Packstoffbahn 13 zu einer Längssiegelnaht 4 verschweißen.

Unterhalb des Form- und Füllrohrs 12 befindet sich ein aufund abbewegliches Quernahtbackengehäuse 21, das eine nicht dargestellte Falteinrichtung für den Schlauch 15, sowie eine Siegeleinrichtung 22 trägt, die zwei gegeneinander verfahrbare, identisch ausgebildete, beheizbare Siegelbacken 23, 24 mit einer integrierten Trenneinrichtung umfasst.

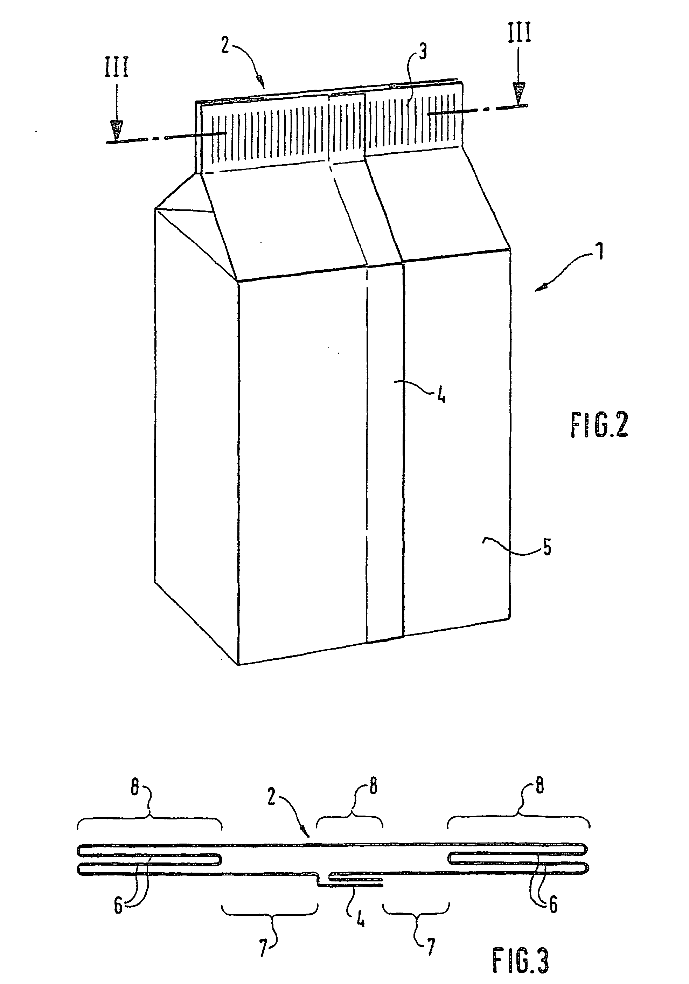

Mittels der somit beschriebenen und an sich bekannten Schlauchbeutelmaschine 10 lassen sich einzelne Schlauchbeutelpackungen 1 herstellen, wie sie in Figur 2 dargestellt sind. Die Schlauchbeutelpackung 1 hat einen flossenartig gefalteten Kopfverschluss 2 mit einer Quersiegelnaht 3 und der Längssiegelnaht 4, welche sich über die gesamte eine Vorderseite 5 der Schlauchbeutelpackung 1 und deren Kopfverschluss 2, sowie über den nicht näher bezeichneten Bodenbereich der Schlauchbeutelpackung 1 erstrecken. Durch das Falten des Kopfverschlusses 2 mit V-förmig eingezogenen Seitenfalten 6 sowie der Längssiegelnaht 4 hat der Kopfverschluss 2 einen Bereich 7, in dem der Packstoff zweilagig ist und einen Bereich 8, in dem der Packstoff vierlagig ist (Figur 3). Im Übrigen weist auch der ebenfalls quergesiegelte Bodenbereich der Schlauchbeutelpackung 1 Bereiche mit entsprechend unterschiedlichen Anzahlen von Packstofflagen auf.

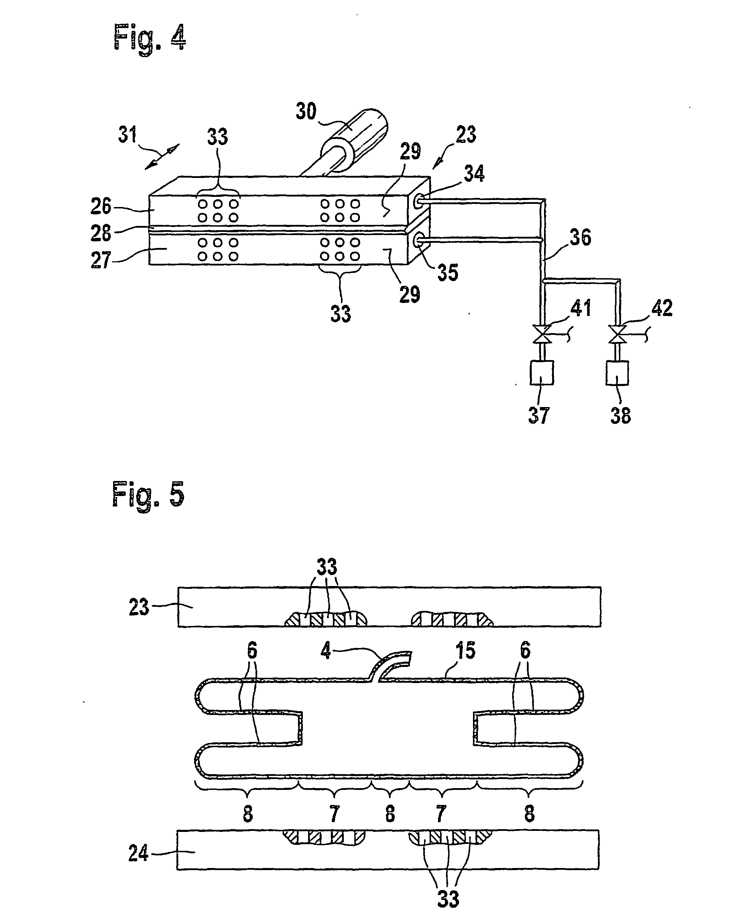

Nunmehr wird auf die zum Bilden der Quersiegelnähte 3 verwendeten, erfindungsgemäßen Siegelbacken 23, 24 anhand der Figuren 4 bis 7 näher eingegangen: In der Figur 4 ist die eine Siegelbacke 23 dargestellt. Man erkennt, dass die Siegelbacke 23 zwei Siegelbereiche 26, 27 aufweist, wobei der obere Siegelbereich 26 zum Bilden einer Quersiegelnaht 3 dient, die am Bodenbereich der Schlauchbeutelpackung 1 angeordnet ist, während der untere Siegelbereich 27 zum Bilden einer Quersiegelnaht 3 dient, die an dem Kopfverschluss 2 der Schlauchbeutelpackung 1 angeordnet ist. Zwischen den beiden Siegelbereichen 26, 27 erkennt man ferner ein Trennmesser 28, das die einzelnen Schlauchbeutelpackungen 1 von dem Schlauch 15 abtrennt.

In der Siegelbacke 23 sind nicht dargestellte, elektrisch betriebene Heizpatronen angeordnet, die dafür sorgen, dass über die dem Schlauch 15 zugewandte Kontaktfläche 29 der Siegelbacke 23 beim Kontakt mit dem Schlauch 15 genügend Wärme in die zu siegelten Bereiche des Schlauches 15 übertragen wird. Zum Inkontaktbringen der Siegelbacke 23 mit dem Schlauch 15 ist die Siegelbacke 23 beispielsweise mit einem pneumatisch betriebenen Antrieb 30 gekoppelt, welcher im Quernahtbackengehäuse 21 gelagert ist, und der für eine Bewegung der Siegelbacke 23 in Richtung des Doppelpfeiles 31 sorgt.

In den dem Schlauch 15 zugewandten Kontaktflächen 29 der Siegelbacken 23 münden mehrere Gruppen von Bohrungen 33, welche innerhalb der Siegelbacke 23 jeweils mit einem zentralen Kanal 34, 35 gekoppelt sind. Die beiden Kanäle 34, 35 münden wiederum in einem Sammelanschluss 36, der mit einer Unterdruckquelle 37 oder einer Überdruckquelle 38 verbindbar ist. Die Kopplung des Sammelanschlusses 36 mit der Unterdruckquelle 37 oder der Überdruckquelle 38 erfolgt durch eine entsprechende Ansteuerung von Ventilen 41, 42 mittels der Steuereinrichtung der Schlauchbeutelmaschine 10.

Wesentlich ist die Anordnung der Bohrungen 33 in den Kontaktflächen 29, die sich an der Lage bzw. Anzahl der unterschiedlichen Packstofflagen orientiert, wozu nunmehr auf die Figur 5 eingegangen wird. Man erkennt an der Figur 5, dass die Bohrungen 33 in den Bereichen 7 angeordnet sind, in denen lediglich zwei Lagen von Packstoff im Schlauch 15 vorhanden sind, während in den Bereichen 8, in den vier Lagen Packstoff vorhanden sind, keine Saugbohrungen 33 angeordnet sind.

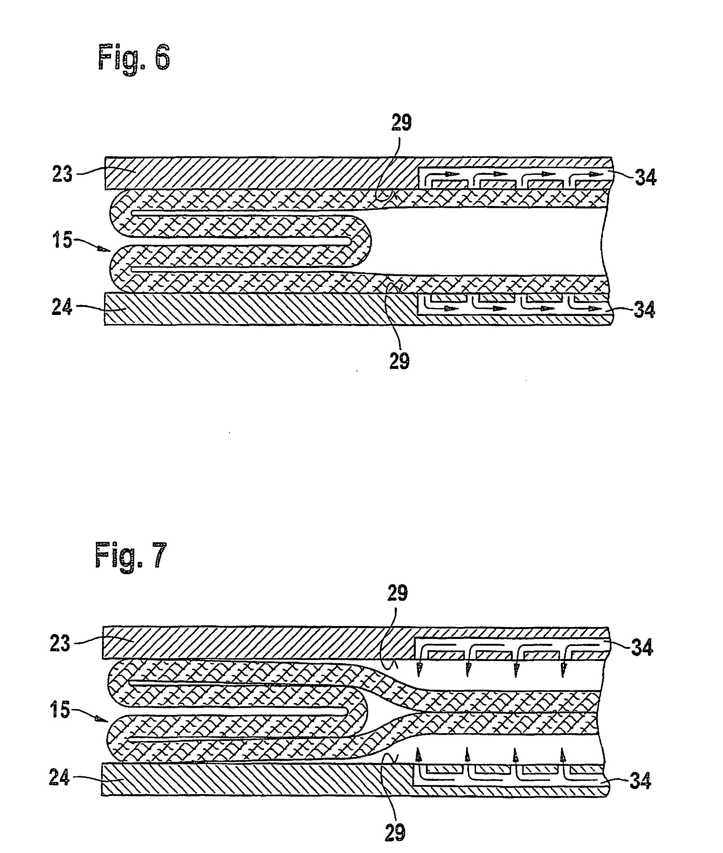

Nunmehr wird auf die Funktion der Siegeleinrichtung 22 bzw. der Siegelbacken 23, 24 anhand der Figuren 6 und 7 eingegangen: In den Figuren 6 und 7 ist dabei in jeweils vergrößerter, nicht maßstäblicher Darstellung ein Teil des Querschnitts der Schlauchbeutelpackung 1 beim Bilden einer Quernaht 3 dargestellt. Zum Bilden der Quersiegelnähte 3 ist es erforderlich, dass die beiden Siegelbacken 23, 24 mittels des Antriebs 30 gegeneinander verfahren werden, so dass die Kontaktflächen 29 in Berührung mit dem Schlauch 15 gelangen. Da aufgrund der Vierlagigkeit des Schlauches 15 in den Bereichen 8 die Siegelbacken 23, 24 zuerst in den Bereichen 8 in Kontakt mit dem Schlauch 15 geraten, wird in den Bereichen 8 zuerst und aufgrund des höheren Druckes auch eine größere Wärmemenge von den Kontaktflächen 29 in den Schlauch 15 übertragen. Um diesen Effekt auszugleichen, wird beim Inkontaktbringen der Siegelbacken 23, 24 mit dem Schlauch 15 über das eine Ventil 41 die Unterdruckquelle 37 in Wirkverbindung mit den Bohrungen 33 geschaltet, so dass über die Bohrungen 33 der Schlauch 15 in den zweilagigen Bereichen 7 an die entsprechenden Kontaktflächen 29 gezogen wird (Figur 6). Somit wird auch in den zweilagigen Bereichen 7 des Schlauches 15 ein guter beziehungsweise erhöhter Wärmeübergang von den Kontaktflächen 29 in den Schlauch 15 sichergestellt.

Nach einer bestimmten Zeitspanne wird das Ventil 41 geschlossen und das Ventil 42 geöffnet, so dass nunmehr die Bohrungen 33 mit der Überdruckquelle 38 verbunden sind. Dies bewirkt, dass die zweilagigen Bereiche 7 zusätzlich neben dem von den Siegelbacken 23, 24 aufgebrachten Siegeldruck mit Druckluft gegeneinander gedrückt werden, um eine besonders innige Verbindung beziehungsweise Verschweißung des Schlauches 15 innerhalb der Bereiche 7 zu sorgen. Mit anderen Worten gesagt bedeutet dies, dass durch den Überdruck ein zusätzlicher Druck auf die Bereiche 7 erzeugt wird, so dass der Druck in den Bereichen 7 möglichst gleich hoch ist wie der alleine von den Siegelbacken 23, 24 in den Bereichen 8 erzeugte Druck (Figur 7).

Der gesamte Schweißvorgang beziehungsweise das Bilden der Quersiegelnähte 3 erfolgt, während die beiden Siegelbacken 23, 24 aus der in der Figur 1 dargestellten Stellung in ihre untere, strichpunktiert dargestellte Stellung gelangen. Nach dem Verschweißen beziehungsweise Bilden der Quersiegelnähte 3 fahren die beiden Siegelbacken 23, 24 während ihrer Aufwärtsbewegung wieder auseinander, um die nächsten Quersiegelnähte 3 bilden zu können.

Ergänzend wird erwähnt, dass die beschriebenen Siegelbacken 23, 24 in vielfältiger Weise abgeändert werden können, ohne vom Erfindungsgedanken abzuweichen, der darin besteht, in den Bereichen, in denen sich eine reduzierte Anzahl von Packstofflagen befindet, durch den Einsatz von mit einer Unterdruck- bzw. Überdruckquelle verbundenen Bohrungen für einen besseren Wärmeübergang sowie einen erhöhten Siegeldruck zu sorgen. So ist es beispielsweise denkbar, die Bohrungen 33 nur mit einer Unterdruckquelle oder einer Überdruckquelle zu verbinden, da beiden Maßnahmen für sich bereits eine Verbesserung der Siegelqualität bedeuten. Ferner kann auch die Anzahl oder Anordnung der Bohrungen 33 in den Siegelbacken 23, 24 dem jeweiligen Anwendungsfall angepasst werden.

## Patentansprüche

1. Vorrichtung (10) zum Herstellen und Verschließen von aus wenigstens einer heißsiegelfähigen Packstoffbahn (13) hergestellten Packungen (1), mit einer Schlauchformeinrichtung (11, 12) zum Formen eines Schlauchs (15) aus der wenigstens einen ebenen Packstoffbahn (13), einer Längsnahtsiegeleinrichtung (20) zum Bilden einer Längsnaht (4) im Bereich einander überlappender Abschnitte der wenigstens einen Packstoffbahn (13) und einer Quernahtsiegeleinrichtung (22), welche zwei beheizbare, gegeneinander verfahrbare Siegelbacken (23, 24) umfasst, um den Schlauch (15) zur anschließenden Abtrennung von Packungen (1) in einzelne, durch Quernähte (3) begrenzte Abschnitte aufzuteilen, **dadurch gekennzeichnet, dass** in wenigstens einer der Siegelbacken (23, 24) auf der dem Schlauch (15) zugewandten Seite wenigstens eine, zumindest mit einer Unterdruckquelle (37) in Verbindung bringbare Bohrung (33) angeordnet ist und dass die wenigstens eine Bohrung (33) in einem Bereich (7) des Querschnitts der zu bildenden Quernaht (3) angeordnet ist, der eine gegenüber anderen Bereichen (8) reduzierte Anzahl von Packstofflagen aufweist.

2. Vorrichtung nach Anspruch 1, **dadurch gekennzeichnet, dass** die wenigstens eine Bohrung (33) neben der Unterdruckquelle (37) zusätzlich wechselweise mit einer Überdruckquelle (38) verbindbar ist.

3. Verfahren zum Herstellen und Verschließen von aus wenigstens einer heißsiegelfähigen Packstoffbahn (13) hergestellten Packungen (1) mittels einer Vorrichtung (10) nach Anspruch 1 oder 2, bei dem aus der wenigstens einen Packstoffbahn (13) zunächst ein Schlauch (15) geformt wird, worauf danach in dem Schlauch (15) eine Längsnaht (4) und die Packungen (1) voneinander trennende Quernähte (3) gebildet werden, wobei die Bildung der Quernähte (3) durch Gegeneinanderpressen einer beheizbare Siegelbacken (23, 24) umfassenden Siegeleinrichtung (22) erfolgt, **dadurch gekennzeichnet, dass** beim Gegeneinanderpressen der Siegelbacken (23, 24) über eine Unterdruckquelle (37) in wenigstens einer Bohrung (33) einer Siegelbacke (23, 24) ein Unterdruck erzeugt wird, der einen Bereich (7) des Schlauchs (15) in Kontakt mit der entsprechenden Siegelbacke (23, 24) bringt, dessen Querschnitt eine gegenüber anderen Bereichen (8) reduzierte Anzahl von Packstofflagen aufweist.

4. Verfahren nach Anspruch 3, **dadurch gekennzeichnet, dass** im Anschluß an das Erzeugen des Unterdrucks in der wenigstens einen Bohrung (33) ein Überdruck erzeugt wird.

## Claims

1. Device (10) for producing and sealing packagings (1) produced from at least one heat-sealable packaging material strip (13), with a flexible-tube-forming device (11, 12), for forming a flexible tube (15) from the at least one planar packaging material strip (13), a longitudinal-seam-sealing device (20) for forming a longitudinal seam (4) in the region of overlapping portions of the at least one packaging material strip (13) and a transverse-seam-sealing device (22), which comprises two heatable sealing jaws (23, 24) which can be moved towards each other, in order to divide up the flexible tube (15) into individual portions delimited by transverse seams (3) for the subsequent separation of packagings (1), **characterized in that** at least one bore (33), which can be brought into connection with a negative pressure source (37), is arranged in at least one of the sealing jaws (23, 24), on the side facing the flexible tube (15), and **in that** the at least one bore (33) is arranged in a region (7) of the cross section of the transverse seam (3) to be formed that has a reduced number of layers of packaging material in comparison with other regions (8).

2. Device according to Claim 1, **characterized in that** the at least one bore (33) can be connected not only to the negative pressure source (37) but also in an alternating manner to a positive pressure source (38).

3. Method for producing and sealing packagings (1) produced from at least one heat-sealable packaging material strip (13) by means of a device (10) according to Claim 1 or 2, in which method a flexible tube (15) is formed from the at least one packaging material strip (13), after which a longitudinal seam (4) and transverse seams (3) that separate the packagings (1) from one another are formed in the flexible tube (15), the formation of the transverse seams (3) being performed by pressing together a sealing device (22) comprising heatable sealing jaws (23, 24), **characterized in that** during the pressing together of the sealing jaws (23, 34) a negative pressure is produced by means of a negative pressure source (37) in at least one bore (33) of a sealing jaw (23, 24) and brings a region (7) of the flexible tube (15) that has in cross section a reduced number of packaging material layers in comparison with other regions (8) into contact with the corresponding sealing jaw (23, 24).

4. Method according to Claim 3, **characterized in that**, following the production of the negative pressure in the at least one bore (33), a positive pressure is produced.

## Revendications

1. Dispositif (10) pour produire et sceller des emballages (1) obtenus à partir d'au moins une bande de matériau d'emballage thermosoudable (13), avec un dispositif de formation de tuyaux (11, 12) pour former un tuyau (15) à partir d'au moins une bande de matériau d'emballage (13) lisse, un dispositif de soudage longitudinal (20) pour former une soudure longitudinale (4) au niveau des sections qui se chevauchent sur au moins une bande de matériau d'emballage (13) et un dispositif de soudage transversal (22), comportant deux mâchoires de soudage (23, 24) pouvant être chauffées et être déplacées l'une contre l'autre, pour diviser le tuyau (15) en sections individuelles, séparées par des soudures transversales (3) en vue du détachement ultérieur des emballages (1),
**caractérisé en ce qu'**
au moins un alésage (33) pouvant être mis en relation avec au moins une source de dépression (37) est disposé dans au moins l'une des mâchoires (23, 24) sur la face orientée vers le tuyau (15), et au moins un alésage (33) est disposé dans une zone (7) de la section transversale de la soudure transversale (3) à former, qui comporte un nombre réduit de couches de matériau d'emballage par rapport à d'autres zones (8).

2. Dispositif selon la revendication 1,
**caractérisé en ce qu'**
l'alésage (33) peut, en outre, être alternativement relié à une source de surpression (38) à côté de la source de dépression (37).

3. Procédé pour produire et sceller des emballages (1) obtenus à partir d'au moins une bande de matériau d'emballage thermosoudable (13) au moyen d'un dispositif (10) selon la revendication 1 ou 2, dans lequel un tuyau (15) est d'abord formé à partir d'au moins une bande de matériau d'emballage (13), sur laquelle sont par la suite formées, dans le tuyau (15), une soudure longitudinale (4) et une soudure transversale (3) séparant les emballages (1) les uns des autres, la formation de la soudure transversale (3) ayant lieu par pressage l'une contre l'autre des mâchoires de soudage (23, 24) d'un dispositif de soudage (22),
**caractérisé en ce qu'**
une dépression est produite dans au moins l'un des alésages (33) d'une mâchoire de soudage (23, 24) lors du pressage des mâchoires de soudage (23, 24) l'une contre l'autre, sur une source de dépression (37), laquelle dépression met en contact avec la mâchoire de soudage correspondante (23, 24) une zone (7) du tuyau (15) dont la section transversale comporte un nombre réduit de couches de matériau d'emballage par rapport à d'autres zones (8).

4. Procédé selon la revendication 3,
**caractérisé en ce qu'**
une surpression est produite à la suite de la production de la dépression dans au moins un alésage (33).
